# EUROPEAN PATENT APPLICATION

(11) **EP 1 087 638 A2**
(43) Date of publication of application: **28.03.2001**
(21) Application number: 00307598.3
(22) Date of filing: 04.09.2000
(51) Int. Cl.: H04Q 11/08

(54) **Increasing the size of a time-slot interchange unit**

(30) Priority: 16.09.1999 US 397694
(71) Applicant: LUCENT TECHNOLOGIES INC., Murray Hill, New Jersey 07974-0636 (US)
(72) Inventor: Vedder, Dietrich, Carol Stream, Illinois 60188 (US)
(74) Representative: Buckley, Christopher Simon Thirsk

(57) **Abstract**

An arrangement for enlarging the size of a time-slot interchange system. The time-slot interchange of the prior art may be considered a single bank unit. In accordance with the invention, a plurality of banks of elemental units are interconnected. When n banks are so interconnected, the number of input leads and output leads for the TSI is increased by a factor of n, without substantially changing the requirements for the technology of the elemental TSI units. Each bank of elemental TSI units receives signals from m of the input streams, and stores information in those input streams for all output streams. The various input streams go to the various banks so that data for any output stream from any input stream is stored in one of the elemental TSI units. The elemental units which store signals destined for a particular output lead are called partners. The information stored in the partners is combined in order to generate the output stream. Advantageously, the basic size of the TSI is increased by a factor of n at the expense only of n times as many elemental TSI units per output lead. In one embodiment, the partner TSI elemental units are interconnected in such a way that in each bank, a cumulative signal is derived, which is the combination of information stored in the elemental TSI unit and in preceding partners. Advantageously, fewer fiber interconnects are required.

## Description

### Related Application:

This Application is related to an Application entitled, "Transmission of Signals in a Large Time-Slot Interchange Unit", being filed concurrently herewith by J. Ostrander and D. Vedder, and assigned to the Assignee of this Application.

### Technical Field:

This invention relates to the architecture of Time-Slot Interchange Units for switching systems.

### Problem:

A Time-Slot Interchange Unit is a basic element of those modern switching systems which switch pulse code modulated, (PCM) input signals to pulse code modulated, (PCM) output signals. Larger TSI units switch signals from a plurality of input streams to a plurality of output streams, usually on a non-blocking basis, such that a particular time-slot in a particular input stream can be switched to an arbitrary time-slot of an arbitrary output stream.

Demands for switching for larger numbers of circuits have greatly increased the need for larger and larger TSI units. A problem of the prior art is that there is no economical way of increasing the size of a TSI unit beyond the basic capabilities of the integrated circuit chips of which such a unit is composed.

### Solution:

The above problem is solved, and a sharp increase in the size of TSI units is made possible in accordance with this invention, wherein a plurality of groups , (banks) of TSI input streams are fed to each of a similar plurality of groups, (banks) of elemental TSI units. An elemental TSI unit can accept inputs from all of the plurality of TSI input streams that are fed to the group, and delivers an output having the same number of time-slots as each of the input streams. In accordance with Applicants' invention, each elemental TSI unit has a set of n - 1 partners for accepting time-slots destined for an output stream corresponding to each of the n - 1 other banks of TSI elemental units. The output of all of the partners for a particular output stream are OR'd to produce an output stream. Advantageously, this arrangement increases the size of a TSI by a factor of n, where n is the number of banks of elemental TSI units. Advantageously, the cost of this increase is a factor of only n² times as many elemental TSI units for a TSI that is n times as large; with the increase in the density of large scale integration circuits, this should not be a problem for a factor n of up to 8, using 1999 technology.

### Brief Description Of The Drawing(s):

Figure 1 is a simplified block drawing, illustrating a prior art TSI unit;
Figure 2 is a block diagram, illustrating a new TSI unit that is 8 times larger;
Figures 3 and 4 are block diagrams showing an alternate arrangement for exchanging signals among the elemental TSI units of Figure 2.

### Detailed Description:

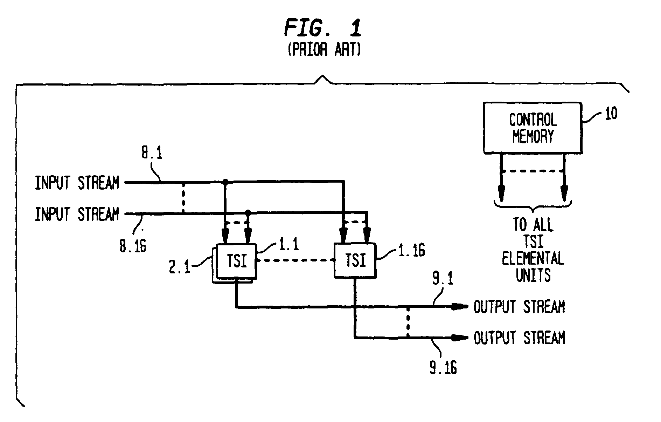

Figure 1 shows a block diagram, illustrating a prior art Time-Slot Interchange Unit. The unit accepts 8.1, . . . , 8.16 PCM input streams, each having 4,096 time-slots per frame. All 16 input streams are delivered to each of the elemental TSI units 1.1, . . . , 1.16. Each TSI elemental unit has the ability to accept up to 16 inputs, (i.e., 1 input for each of up to 16 of the input streams), in each time-slot interval, and to store up to 16 input time-slots in up to 16 arbitrary locations within the elemental TSI unit. At the end of the frame, the TSI unit is prepared to deliver an output stream, and the inputs for the next frame are delivered to a mate elemental TSI unit, (double buffering), such as unit 2.1. The arrangement shown can also work without double buffering, in case double buffering is not needed. The output stream is taken from the sequential time-slots stored in an elemental TSI unit. There is a mate TSI memory for each elemental TSI unit, so that one TSI unit can accept inputs, while its mate TSI memory delivers outputs, and vice versa. A unit and its mate memory have separate memories, but share control logic.

The operation of each elemental TSI unit is controlled by a control memory 10, which tells an elemental TSI unit which, if any, input stream contains time-slots to be stored in the TSI, and which identifies the time-slot location where the input time-slot is to be stored.

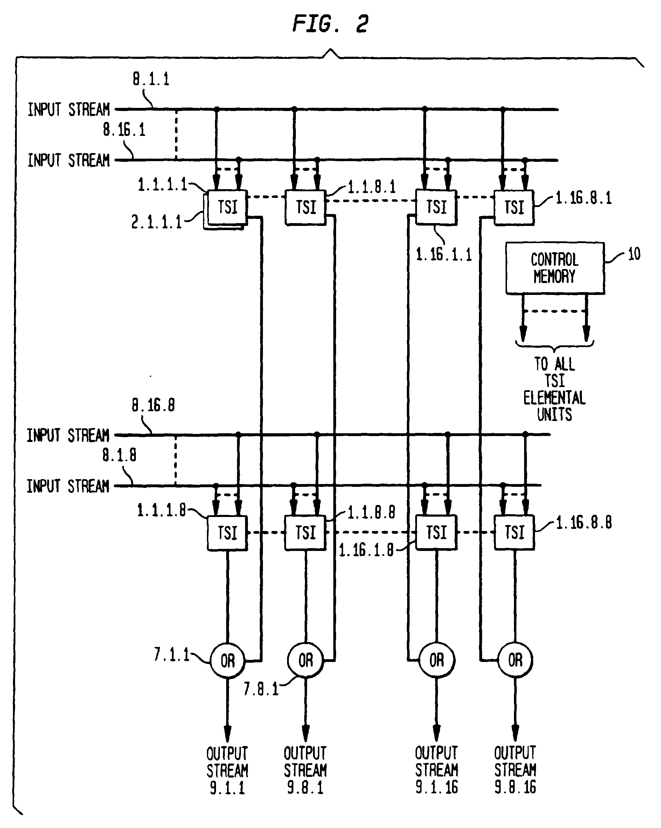

Figure 2 which shows the architecture in accordance with Applicants' invention, illustrates an exemplary embodiment for accepting 128 input streams, (each stream having 4,096 time-slots per frame), arranged in 8 banks of 16 input streams each. Input streams to the first bank are labeled 8.1.1, . . . , 8.16.1. Similarly, the input streams to the 8th bank are labeled 8.1.8, . . . , 8.16.8.

A major change between the configuration of Figure 1 and Figure 2, is that whereas the bank of TSI elemental units of Figure 1 consisted of 16 elemental TSI units, (plus their 16 mates, not shown), each of the 8 banks of Figure 2 has 128 elemental TSI units corresponding to the 128 output streams. This is done so that 128 elemental TSI units corresponding to the 128 output streams, are available in each bank to store inputs from the input streams served by that bank for each of the 128 output streams. The outputs of the corresponding elemental TSI units of each bank are then combined by an OR function, so that the inputs from each of the banks of input streams can be delivered to each output stream.

The eight sets of 16 output streams are labeled 9.1.1, . . . , 9.1.16; . . . ; 9.8.1, . . . , 9.8.16. For clarity, the 128 TSI units of the first bank are labeled 1.1.1.1, . . . , 1.1.8.1; . . . ; 1.16.1.1, . . . , 1.16.8.1. The digits, after the identifying 1, have the following significance: the first digit identifies a column, i.e., 1 of 16 corresponding to the less significant digits of the output stream identifier, (which is identical to the more significant digit of the input stream identifier); the second digit identifies a row, i.e., the more significant 1 of 8 selection of an output stream identifier; and the third digit identifies the bank in which the elemental TSI unit is found, i.e., the less significant digits of the input stream identifier. For example, a time-slot appearing on input stream 8.1.1, (the first input stream to the first bank), and destined for output stream 9.8.16, (the 128th output stream), would be stored in elemental TSI unit 1.16.8.1, (the 128th element of the first bank). Similarly, an input from input stream 8.1.8, (the first input stream to the eighth bank), and destined for output stream 9.8.16, (the 128th output stream), would be stored in elemental TSI unit 1.16.8.8, (the 128th elemental TSI unit of the 8th bank), which accepts input streams 8.1.8, . . . , 8.16.8. The time-slots stored in units 1.16.8.1 and 1.16.8.8, both of which are destined for the same output stream 9.8.16, are merged by effectively OR'ing the outputs of elemental TSI units 1.16.8.1, and 1.16.8.8, as well as the 1.16.8.D elemental TSI unit of banks 2 - 7, where D varies from 2 - 7.

The rules can be summarized as follows:
Let an elemental TSI unit be designated 1.A.B.C where A is the identification of the input stream (1 - 16) within a bank, B is the identifi-cation of one of the 8 groups of 16 within a bank, and C is the identi-fication of the bank.
Let each input stream be designated 8.X.Y. Similarly, let the output streams be designated 9.V.W. Then, input stream 8.X.Y goes to elemental TSI units 1.A.B.Y, where A ranges over the values 1, . . . , 16, and B ranges over the values 1, . . . , 8. An input stream time-slot is stored in TSI 1.W.V.D, if the destination output stream is 9.V.W, where D ranges overs the values 1, . . . , 8. Output stream 9.V.W. is derived by OR'ing the outputs of elemental TSI units 1.W.V. D.

Note that the requirements for the elemental TSI units have not been changed from the requirements of the prior art systems. Each elemental TSI unit must be able to accept up to 16 time-slots in each time-slot interval, and store these 16 time-slots in an arbitrary location within the elemental TSI unit. The only additional requirement is that the process of OR'ing the outputs of 8 elemental TSI units not limit the capability of the elemental TSI unit.

The control memory 10, tells each elemental TSI unit where, if anywhere, an input front each one of the 16 input streams connected to that elemental TSI unit is to be stored for each of the 4,096 time-slot intervals of each frame.

Note that in this example, 8 banks of 16 elemental TSI units are used. Clearly, subject to the needs of the system and the limitations of the OR units and the elemental TSI units, more banks can be added and/or each bank expanded to process more input streams.

Also shown in Figures 1 and 2 is the use of "mate" TSI units, each to store every other frame, and to transmit outputs on alternate frames. This technique is well known in the art. For clarity only, one (2.1 in Figure 1, and 2.1.1.1. in Figure 2), mate unit is actually shown in the diagram, but when the technique of using mate units is practiced, each TSI element unit is a TSI unit and its mate.

In order to improve the reliability of the complete system, the system is duplicated. In order to further improve the reliability, smaller sub-groups of units are separately switchable to an active or standby status. In this system, selectors are placed between reliability duplicated elemental TSI units and the OR gate for combining signals from partner elemental TSI units of different banks. If we call the duplicated units A & B units, this arrangement advantageously allows for the use, for example, of an A unit in the top bank of the first column, and a B unit in the second bank of the first column, and/or, an A unit in the top bank of the first column, arid a B unit in the top bank of the second column, etc.

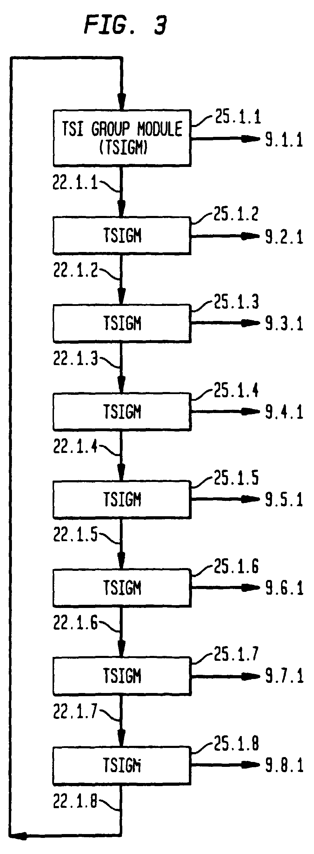

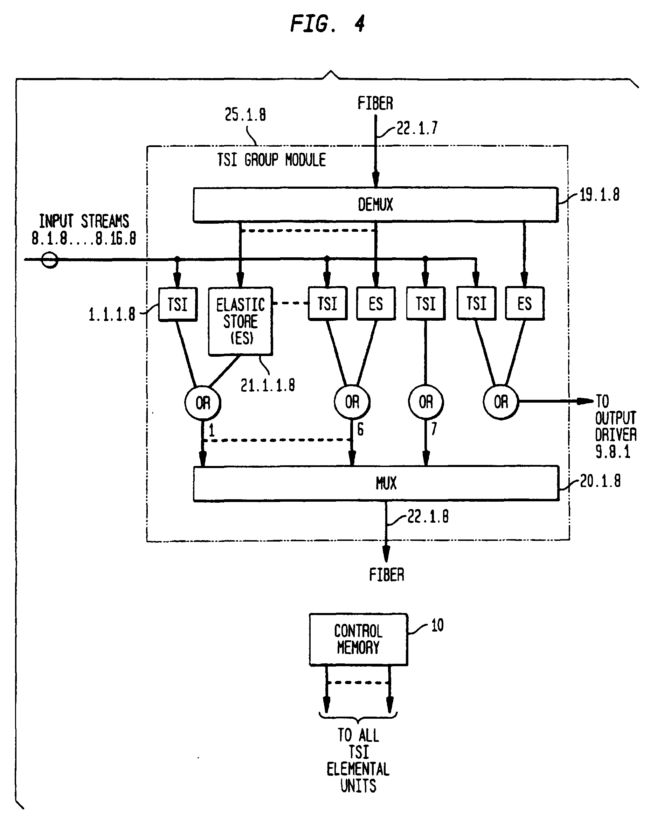

Figures 3 and 4 show an alternative implementation of an arrangement for communica-ting among the TSI elemental units of the array shown in Figure 2. The array of Figure 2 has not shown details necessary for synchronism . The synchronism can be achieved by inserting elastic stores between the output of each elemental TSI unit, and the OR gate that feeds the output stream. Such elastic stores would then be dynamically frame-aligned to insure that all the inputs to the OR gate driving the output lead are in synchronism.

An alternative approach to the solution of this problem, is to have each elemental TSI unit supply its outputs for combination with the outputs of its partners from previous banks, and in this cumulative fashion, permit the assembly of all of the time-slots of the 8 partners. This type of approach is illustrated in Figures 3 and 4.

Figures 3 and 4 show an alternative arrangement for interconnecting elemental TSI units. In accordance with the arrangement, it is particularly adaptable to the use of high speed optic fibre interconnection. Instead of OR'ING the outputs of the 8 elemental TSI partners which drive a particular output lead, the output of each partner drives an OR gate whose other input is the accumulation of signals from partners of previous banks. The OR gate either drives an elastic store for storing the accumulated signals for the next bank, to be combined in the OR gate of that bank with the output of the partner of that bank, or the OR gate drives an output lead directly if the contents of all partner TSI units have been accumulated. Advantageously, such an arrangement sharply reduces the number of separate fiber connect-ions.

Figure 3 shows the interconnections of the left most 8 TSI elements of the 8 banks. These elements are grouped into a module, (TSI Group Module), (TSIGM), such as 25.1.1, . . . , 25.1.8, and the modules are interconnected by optic fibers, each being connected to the module of the next bank, and the last bank being connected to the first. As can be observed from Figure 2, there is no cross-communication between TSI elements of different columns, only communication between the partner TSI elements of a single column, which in the configuration of Figure 2, are simply OR'd together. Figure 3 shows that each TSIGM has a fiber input from a previous bank, a fiber output to a successor bank, and drives one output lead. For example, TSIGM 25.1.1. has fiber input 22.1.8, (from TSIGM 25.1.8); has one fiber output to the next TSIGM (fiber output 22.1.1), connected to TSIGM 25.1.2; and drives one output lead (9.1.1).

Figure 4 shows the details of one of these TSIGMs; namely, TSIGM 25.1.8. The input fiber 22.1.7 from TSIGM 25.1.7 drives a de-multiplexer, demux 19.1.8. This demultiplexer has 7 outputs. The equivalent of the 8th output is output lead 9.7.1, generated in TSIGM 25.1.7, which leaves TSIGM 25.1.7 via that output lead, and does not go to TSIGM 25.1.8. TSIGM 25.1.8 has 8 TSI elements: 1.1.1.8, . . . , 1.1.6.8, 1.1.7.8, and 1.1.8.8. The 7 outputs of demux 19.1.8 drive 7 elastic stores, 21.1.1.8, . . . , 21.1.6.8, and 21.1.8.8. There is no output from demux 19.1.8 for generating a signal to be combined with the signal from TSI element 1.1.7.8, since the equivalent of that signal has already been used to drive output lead 9.7.1 in TSIGM 25.1.7; in other words, TSI element 1.1.7.8 is the first partner of its column. To clarify the explanation of Figure 4, the mate TSIs, 2.1.1.8, . . . , 2.1.8.8, are not shown.

The outputs of elastic stores are combined in an OR gate with the corresponding TSI element to generate a signal representing the previously accumulated outputs from partner TSI elements (sent via demux 19.1.8 from previous TSI Group Modules), and the TSI element of this bank, which accumulates the TSI signals for the particular column in this particular bank. In the case of elastic store 21.1.8.8, this elastic store has accumulated signals from 7 previous partners, and its output can now be combined with the output of TSI element 1.1.8.8 via an OR gate to drive output driver 9.8.1. In the case of TSI element 1.1.7.8, TSIGM 25.1.7 has already driven output lead 9.7.1 with the combined results of all eight partners of that column, so that demux 19.1.8 does not supply a signal for combination with TSI element 1.1.7.8, instead, TSI 1.1.7.8 is the first partner to generate a signal for subsequent combinat-ion with signals from its partner TSI elements for eventually driving output lead 9.7.1 in TSIGM 25.1.7. The outputs of the 7 OR gates are then fed to multiplexer, mux 20.1.8, which drives fiber 22.1.8, which serves as an input to TSIGM 25.1.1.

(Note that in this simplified diagram, the input leads to the TSI elements are not shown, they are the same as the input leads to the corresponding TSI elements shown in Figure 2).

The elastic stores add sufficient delay so that, combined with other delays, an accumulation of 1 frame delay is achieved in the traversal of the signals from the various partners contributing to a particular output. The outputs of the TSI are similarly delayed by 1/8th of a frame from bank to bank, so that their outputs are synchronized with the outputs of the corresponding elastic stores. TSI 1.1.7.8, which has no corresponding elastic store, has its output delayed by the same amount as, for example, TSI element 1.1.1.8, which does have a corresponding elastic store.

The arrangement of Figures 3 and 4 reduces the number of fiber connections over the arrangement of Fig. 2.

Note that while in this particular embodiment, there is one elastic store corresponding to each of the TSI elements, (except those elements which initiate a signal stream for the set of partners, i.e., TSI element 1.1.7.8, in the example of TSIGM 25.1.8), it is possible that if synchronization problems are not as severe as they are currently thought to be, that a single elastic store in series, with each of the fibers interconnecting TSIGMs, would be adequate.

The above is a description of one preferred embodiment of Applicants' invention. Other embodiments will be apparent to those of ordinary skill in the art, without departing from the scope of the invention. The invention is limited only by the attached Claims.

## Claims

1. A Time-Slot Interchange Unit for switching time-slots of n x m input streams to time-slots of n x m output streams, comprising:
n banks of elemental TSI units;
each bank for receiving m digital input streams;
each bank comprising n x m elemental TSI units for storing time-slots from the m input streams into storage, each elemental TSI unit for deriving a portion of one of the n x m output streams;
wherein each output stream is derived by combining the contents of partner elemental TSI units, corresponding to the output stream, from every bank.

2. The apparatus of Claim 1, where each elemental TSI unit has a mate element such that a memory of a mate element is being used as a source of an output stream, while the elemental TSI memory unit is being loaded.
